# EUROPÄISCHE PATENTSCHRIFT

(11) **EP 0 781 949 B1**
(45) Veröffentlichungstag und Bekanntmachung des Hinweises auf die Patenterteilung: **05.06.2002**
(21) Anmeldenummer: 96810899.3
(22) Anmeldetag: 23.12.1996
(51) Int. Cl.: F16J 15/46

(54) **Wirbelschicht-Einrichtung**
Fluidized bed device
Dispositif de lit fluidisé

(30) Priorität: 29.12.1995 CH 370995
(43) Veröffentlichungstag der Anmeldung: 02.07.1997
(73) Patentinhaber: GLATT GMBH, 79589 Binzen (DE)
(72) Erfinder: Luy, Bernhard. Dr., 79102 Freiburg (DE); Tondar, Matthias, 78966 Hausen i.W. (DE)
(74) Vertreter: Zbinden, Paul A.

(56) Entgegenhaltungen:
- EP-A- 0 572 356
- FR-A- 736 209
- US-A- 2 606 046
- US-A- 4 073 521

## Beschreibung

Die Erfindung betrifft eine Wirbelschicht-Einrichtung.

Bekannte Wirbelschicht-Einrichtungen besitzen einen Behälter, der einen verschwenkbaren Siebboden enthält. Die Wandung des Behälters besteht aus mehreren Wandungsteilen, die bei Stossstellen paarweise aneinander anstossen, lösbar miteinander verbunden und bei den Stossstellen mit ringförmigen, im Querschnitt vollen sowie rechteckförmigen Flachdichtungen abgedichtet sind, von denen jede in einer Ringnut eines Wandungsteils gehalten ist. Die Wandung hat einen sich in der Nähe einer Stossstelle von zwei Wandungsteilen befindenden, den Siebboden umschliessenden Ring mit einer zum Siebboden hin offenen, im Querschnitt viereckförmigen Ringnut. In dieser ist eine ringförmige, hohle, aufblasbare, im Querschnitt im allgemeinen viereckförmige Dichtung angeordnet, die auf ihrer dem Siebboden zugewandten Seite normalerweise Rippen oder Lippen mit Kanten aufweist. Wenn sich der Siebboden in seiner horizontalen Betriebs-Stellung befindet, kann die hohle Dichtung derart mit Druckluft aufgeblasen werden, dass die Dichtung den Siebboden dicht mit der Wandung verbindet.

Diese bekannten Wirbelschicht-Einrichtungen haben den Nachteil, dass zum Abdichten der zwei in der Nähe des Siebbodens aneinander anstossenden Wandungsteile und zum dichten Verbinden des Siebbodens mit der Wandung zwei separate Dichtungen erforderlich sind. Ferner begrenzen die zwischen Wandungsteilen angeordneten Flachdichtungen und die im Querschnitt viereckförmige, aufblasbare Dichtung zusammen mit den durch sie gegeneinander abgedichteten Teilen Kehlen und/oder Spalte und/oder Ritzen, die im Querschnitt Ecken haben. Dabei sind insbesondere auch in den Ringnuten Spalte und sonstige von den Dichtungen nicht ausgefüllte Zwischenund/oder Hohlräume vorhanden, die im Querschnitt Ecken haben. Solche Kehlen, Spalte, Ritzen und sonstige Zwischen- und/oder Hohlräume bilden beim Betrieb für das beim Verwirbeln des Gutes durch den Behälter strömende Gas Toträume, in denen sich leicht Staubpartikel und andere Verunreinigungen ansammeln. Wenn die Teilchen des verwirbelten Gutes zum Beispiel zum Agglomerieren oder zum Aufbringen von Überzügen mit einer Flüssigkeit besprüht werden, kann diese Flüssigkeit ebenfalls in die Ringnuten und sonstige Toträume gelangen und diese zusammen mit den Staubpartikeln verkleben.

Bekannte Wirbelschicht-Einrichtungen sind zum Teil mit Nass-Reinigungsvorrichtungen ausgerüstet, um eine Reinigungsflüssigkeit gegen die Innenflächen der Wandung des Behälters und den Siebboden zu sprühen. Die genannten Toträume behindern jedoch das Reinigen mit Hilfe einer derartigen Reinigungsflüssigkeit. Dabei geschieht es insbesondere auch häufig, dass Verunreinigungen und Reinigungsflüssigkeit in die die Dichtungen enthaltenden Ringnuten gelangen und in diesen verbleiben. Der Innenraum des Behälters kann daher bei den bekannten Wirbelschicht-Einrichtungen durch Zersprühen einer Reinigungsflüssigkeit nur mangelhaft gereinigt werden. Dies ergibt insbesondere auch die Gefahr, dass sich in den Toträumen Kulturen von Mikroorganismen entwickeln.

Wenn hohe Anforderungen an die Reinheit der im Behälter einer Wirbelschicht-Einrichtung verarbeiteten, teilchenförmigen Güter gestellt werden, ist es daher oft und insbesondere beim Wechseln der verarbeiteten Güter erforderlich, dass das Bedienungspersonal den Behälter öffnet sowie zerlegt und die Dichtungen sowie den Siebboden zum Reinigen vorübergehend ausbaut. Wenn toxische oder sonst gesundheitsgefährdende Güter verarbeitet wurden, kann das Öffnen des Behälters und das Ausbauen von Teilen jedoch eine Kontamination der Umgebung und eine Gefährdung der den Behälter öffnenden und reinigenden Person(en) verursachen.

Aus der US Patentschrift 4 073 521 und der französischen Patentschrift 736 209 sind aufblasbare Dichtungen bekannt, die im Querschnitt kreisförmige Aussenflächen haben. Diese Dichtungen dienen jedoch nicht zum dichten Verbinden von Teilen einer Wirbelschicht-Einrichtung, sondern zum Verbinden von zwei Teilen anderer Einrichtungen. Zudem begrenzen diese Teile und Dichtungen zusammen ebenfalls eckige Hohlräume und/oder Spalte, in denen sich Staub und sonstige Verunreinigungen ansammeln könnten. Das Problem, die Ansammlung solcher Verunreinigungen zu vermeiden, wird in den beiden Patentschriften auch gar nicht angesprochen.

Der Erfindung liegt die Aufgabe zugrunde, eine Wirbelschicht-Einrichtung zu schaffen, mit welcher Nachteile der bekannten Wirbelschicht-Einrichtungen vermieden werden können. Dabei soll insbesondere ermöglicht werden, dass sich möglichst wenig Verunreinigungen bei den Dichtungsmitteln und den durch diese dicht miteinander verbundenen, festen Teile ansammeln, dass die Dichtungsmittel und die genannten festen Teile ohne Öffnen des Behälters und ohne diesen zu zerlegen mit geringem Arbeits- sowie Zeitaufwand sauber gereinigt werden können und dass die Dichtungsmittel sowie der Behälter wirtschaftlich hergestellt sowie zusammengebaut werden können.

Diese Aufgabe wird gemäss der Erfindung durch eine Wirbelschicht-Einrichtung mit den Merkmalen des Anspruchs 1 gelöst.

Vorteilhafte Weiterbildungen der Wirbelschicht-Einrichtung gehen aus den abhängigen Ansprüchen hervor.

Gemäss der Erfindung ist die Aussenfläche der Dichtung im Querschnitt mindestens zum Teil konvex gebogen und um die ganze Dichtung herum stetig sowie glatt. Unter "stetig sowie glatt" wird dabei verstanden, dass die Aussenfläche im Querschnitt keine Ecken und keine Rippen oder Lippen oder sonstige Vorsprünge und keine Rillen oder sonstige Vertiefungen hat.

Jede in einem der beiden Wandungsteile vorhandene Nut ist im Querschnitt gemäss der Erfindung mindestens zum Teil, vorzugsweise mindestens zum grössten Teil und zum Beispiel im wesentlichen vollständig durch die konkav gebogene Nutfläche begrenzt. Die Nuten können jedoch bei ihren inneren Rändern eine schmale, im Querschnitt konvex gebogene Übergangsfläche und/oder eventuell ebene Fläche aufweisen. Wenn der Hohlraum der Dichtung dann ein unter Druck stehendes Fluid enthält und die Dichtung die Wandungsteile dicht miteinander verbindet, liegt die Dichtung dann vorzugsweise im wesentlichen an den ganzen, die Nuten begrenzenden Flächen und insbesondere an den ganzen im Querschnitt konkav gebogenen Nutflächen an, so dass die Dichtung die Nuten im wesentlichen vollständig ausfüllt.

Durch die erfindungsgemässe Ausbildung der Wirbelschicht-Einrichtung kann erreicht werden, dass sich bei der Dichtung und bei den an diese angrenzenden Abschnitten der durch die Dichtung dicht miteinander verbundenen Wandungsteile und des Siebbodens praktisch keine Kehlen, Spalte, Ritzen oder sonstige Zwischen- und/oder Hohlräume ergeben, die Toträume bilden. Dadurch werden unerwünschte Materialablagerungen bei der Dichtung zumindest weitgehend verhindert und die Reinigbarkeit der Dichtung, der Wandungsteile und des Siebbodens beträchtlich verbessert. Die erfindungsgemässe Wirbelschicht-Einrichtung ist daher insbesondere gut zum Herstellen von Arzneimitteln und anderen Produkten geeignet, die eine hohe Reinheit aufweisen müssen.

Die konkav gebogene Nutfläche erweitert sich im Querschnitt vorzugsweise über ihre ganze Höhe vom Grund der Nut weg zu deren Rändern hin. Zudem soll die bzw. jede allenfalls vorhandene, nicht konkav gebogene, die Nut begrenzende Fläche vorzugsweise derart ausgebildet sein, dass die Nut auch im Höhenbereich der bzw. jeder nicht konkav gebogenen Fläche vom Grund der Nut weg breiter wird oder mindestens eine konstante Breite hat. Dies ermöglicht, die Dichtung leicht und ohne Deformation in die Nut einzusetzen und nötigenfalls - beispielsweise zum Auswechseln der Dichtung - leicht aus der Nut herauszunehmen.

Die konkav gebogene Nutfläche jeder Nut bildet im Querschnitt vorzugsweise einen Kreisbogen. Dieser erstreckt sich im Querschnitt über einen Zentriwinkel, der zweckmässigerweise höchstens 180°, vorzugsweise weniger als 180° sowie vorzugsweise mindestens 120° und zum Beispiel 130° bis 175° beträgt.

Die Aussenfläche der Dichtung ist vorzugsweise mindestens in einem gewissen Zustand, beispielsweise in undeformiertem Zustand der letzteren, d.h. wenn im Hohlraum der Dichtung und ausserhalb von dieser der gleiche Druck herrscht, und/oder beispielsweise wenn ihr Hohlraum ein Fluid enthält, dessen Druck grösser ist als der in der Umgebung der Dichtung vorhandene Druck und wenn keine festen Teile aussen an der Dichtung angreifen, im Querschnitt um die ganze Dichtung herum konvex gebogen und beispielsweise im Querschnitt kreisförmig. Die Aussenfläche der Dichtung könnte jedoch im Querschnitt im erwähnten, gewissen Zustand - insbesondere in entspanntem Zustand - eventuell oval- oder ellipsenförmig sein oder sogar auch gerade Abschnitte aufweisen, die durch konvex gebogene Abschnitte miteinander verbunden sind. Die Aussenfläche der Dichtung sollte jedoch im Querschnitt nirgends konkav sein.

Die Wirbelschicht-Einrichtung besitzt vorteilhafterweise noch mindestens eine Nass-Reinigungsvorrichtung mit mindestens einem Sprühorgan, um eine Reinigungsflüssigkeit im Behälter zu zersprühen und um die Innenflächen der Wandungsteile, den Siebboden und den an den Innenraum des Behälters angrenzenden und/oder sich in diesem befindenden Abschnitt der Dichtung zu reinigen bzw. zu waschen. Die Innenflächen der Wandungsteile, der genannte Dichtungsabschnitt und der Siebboden können dann gut und sauber gereinigt werden, ohne dass der Behälter geöffnet und der Siebboden ausgebaut werden muss. Das Zersprühen einer Reinigungsflüssigkeit im Behälter-Innenraum ermöglicht beispielsweise auch dann eine ausreichende Reinigung, wenn bei der Herstellung von Produkten, die zur Bildung von Arzneimitteln dienen und/oder toxisch sind, das im Behälter hergestellte Produkt gewechselt wird. Die Reinigung kann dabei weitgehend oder vollständig maschinell und automatisch - d.h. praktisch ohne Mitwirkung von Personen - erfolgen. Dadurch kann vermieden werden, dass menschliche Einflüsse - wie beispielsweise die ungenügende Sorgfalt einer Person bei der Durchführung von Reinigungsarbeiten - die Reinheit und Qualität der hergestellten Produkte beeinträchtigen. Ferner kann vermieden werden, dass beim Reinigen gesundheitsgefährdende und/oder sonst umweltschädliche Stoffe aus dem Behälter in die Umgebung gelangen und eine Kontamination der letzteren verursachen sowie Personen gefährden. Zudem können durch eine Automatisierung der Reinigung Kosten eingespart werden.

Der Erfindungsgegenstand wird anschliessend anhand eines Ausführungsbeispiels näher erläutert. In der Zeichnung zeigt
die Fig. 1 eine Ansicht des Behälters einer Wirbelschicht-Einrichtung,
die Fig. 2 einen Vertikalschnitt durch einen zwei hohle Dichtungen aufweisenden Bereich des Behälters in grösserem Massstab,
die Fig. 3 Ausschnitte aus dem Behälter und der unteren, in Fig. 2 ersichtlichen Dichtung in noch grösserem Massstab und bei sich in undeformiertem Zustand befindender Dichtung und
die Fig. 4 Ausschnitte aus dem Behälter mit der gleichen Dichtung wie in der Fig. 3, wobei aber die Dichtung aufgeblasen und deformiert ist.

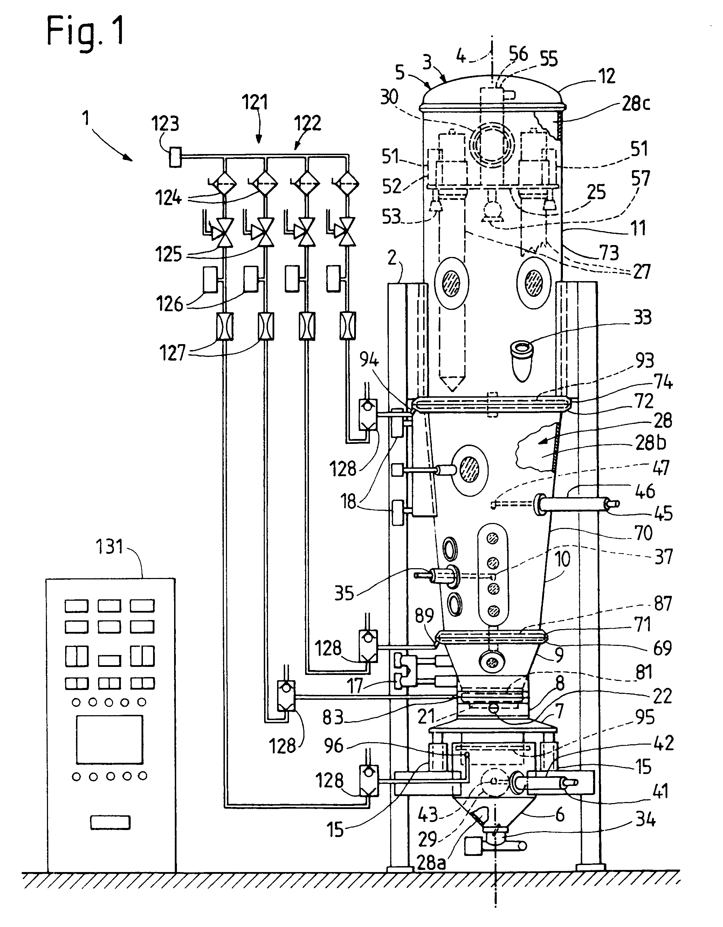

Die in der Fig. 1 ersichtliche Wirbelschicht-Einrichtung 1 weist ein Gestell 2 auf. Dieses besitzt zwei vertikale Säulen und sonstige Teile und hält einen zwischen den Säulen angeordneten Wirbelschicht-Behälter 3. Der Behälter 3 definiert eine vertikale Behälterachse 4 und hat eine im allgemeinen zu dieser rotationssymmetrische Wandung 5. Diese besitzt mehrere übereinander angeordnete, lösbar und/oder verstellbar sowie in der gezeichneten Stellung dicht miteinander verbundene Wandungsteile, nämlich von unten nach oben einen Boden-Wandungsteil 6, einen vertikal verschiebbaren Wandungsteil 7, einen im allgemeinen zylindrischen Verbindungs-Wandungsteil 8, einen konischen Gutkammer-Wandungsteil 9, einen konischen Expansionskammer-Wandungsteil 10, einen zylindrischen Filterkammer-Wandungsteil 11 und einen zum grössten Teil gewölbten Deck-Wandungsteil 12. Die Wirbelschicht-Einrichtung ist ferner mit Verbindungsmitteln ausgerüstet, um die Wandungsteile 6 bis 12 zu verstellen und lösbar miteinander zu verbinden. Zu diesen Verbindungsmitteln gehören zwei hydraulische Stellvorrichtungen 15, Scharniermittel 17, 18 sowie Schrauben und dergleichen.

Ein gasdurchlässiger Siebboden 21 ist im Behälter 3 angeordnet. Der Siebboden 21 ist mit Lager- und Schwenkmitteln 22 um eine horizontale Schwenkachse verschwenkbar am Verbindungs-Wandungsteil 8 gelagert und in verschiedenen Schwenkstellungen fixierbar. Der Siebboden 21 kann insbesondere in einer horizontalen Betriebs-Stellung und in einer ungefähr vertikalen Entleerungs-Stellung festgehalten werden. Wie noch näher beschrieben wird, befindet sich der Siebboden in der Betriebs-Stellung ungefähr in der Höhe der Stossstelle, bei der die beiden Wandungsteile 8, 9 aneinander anstossen. Der Behälter 3 weist noch einen inneren Wandungsteil 25 auf, der eine Trennwand bildet. Der innere Wandungsteil 25 ist in der oberen Hälfte des Filterkammer-Wandungsteils 11 angeordnet, von diesem umschlossen und dicht mit diesem verbunden. Der innere Wandungsteil 25 hält mindestens ein lösbar an ihm befestigtes Filter 27 und vorzugsweise mindestens zwei solche, von denen jedes mit einem formfesten, gasdurchlässigen, metallischen Mantel versehen ist.

Wenn die Wandungsteile 6 bis 12 dicht miteinander verbunden sind, umschliessen sie zusammen einen Behälter-Innenraum 28, der dicht gegen die Umgebung abgeschlossen ist. Der sich in der normalen, horizontalen Betriebs-Stellung befindende Siebboden 21 und der innere Wandungsteil 25 sowie die an diesem befestigten Filter 27 unterteilen den Innenraum 28 in einen sich unter dem Siebboden befindenden Gasverteiler-Raum 28a, einen sich zwischen dem Siebboden und dem inneren Wandungsteil 25 befindenden Wirbel- und Prozessraum 28b und einen sich oberhalb des inneren Wandungsteils 25 befindenden Reingas-Raum 28c.

Der Boden-Wandungsteil 6 ist mit einem Gaseinlass 29 versehen. Am Filterkammer-Wandungsteil 11 ist oberhalb des inneren Wandungsteils 25 ein Gasauslass 30 angeordnet. Die Wirbelschicht-Einrichtung 1 besitzt zudem nicht gezeichnete Gasleitmittel, um ein Prozessgas - zum Beispiel Luft - vom Gaseinlass 29 durch den Behälter 3 hindurch nach oben zum Gasauslass 30 zu leiten. Der Behälter 3 besitzt ferner einen in den Prozessraum 28b mündenden Guteinlass 33 und einen am unteren Ende des Boden-Wandungsteils 6 angeordneten Gutauslass 34. Der Guteinlass und der Gutauslass haben wahlweise abschliessbare und freigebbare Durchgänge. Ferner ist eine Sprühvorrichtung 35 vorhanden, die mindestens ein im Prozessraum 28b angeordnetes Sprühorgan 37 mit mindestens einer Düse aufweist, um ein mindestens zum Teil flüssiges Material auf die im Behälter 3 verwirbelten Teilchen des teilchenförmigen Gutes zu sprühen.

Mindestens eine Nass-Reinigungsvorrichtung bzw. Waschvorrichtung 41 besitzt eine unterhalb des Siebbodens 21 am Boden-Wandungsteil 6 befestigte Halterung mit einem Gehäuse 42 und mindestens ein Sprühorgan 43 mit mindestens einer Düse. Mindestens eine Nass-Reinigungsvorrichtung bzw. Waschvorrichtung 45 besitzt eine oberhalb des Siebbodens 21 sowie oberhalb der Sprühvorrichtung 35 am Expansionskammer-Wandungsteil 10 befestigte Halterung mit einem Gehäuse 46 und mindestens ein Sprühorgan 47 mit mindestens einer Düse. Die Gehäuse 42, 46 sind im wesentlichen ausserhalb der Wandung 5 angeordnet und enthalten einen dicht gegen die Umgebung abgeschlossenen Gehäuse-Innenraum. Die Sprühorgane 43 und 47 sind horizontal verschiebbar in den Gehäusen 42 bzw. 46 geführt und können wahlweise in eine Ruhe-Stellung oder in eine in der Fig. 1 gezeichnete Reinigungs-Stellung gebracht werden. In der Ruhe-Stellung befinden sie sich im wesentlichen ausserhalb des Behälter-Innenraums 28 des Behälters in den Gehäusen 42 bzw. 46. Die Innenräume der letzteren sind dann beispielsweise durch die Sprühorgane 43 und 47 und/oder durch zusätzliche Verschlusselemente ungefähr bündig mit der Innenfläche der Wandung 5 gegen den Behälter-Innenraum 28 abgeschlossen. In der Reinigungs-Stellung befindet sich jedes Sprühorgan 43 und 47 mindestens teilweise im Gasverteiler-Raum 28a bzw. Prozessraum 28b. Die Sprühdüsen der Sprühorgane 43 und 47 befinden sich dann zum Beispiel ungefähr bei der Behälterachse 4. Die bzw. eine Sprühdüse des unteren Sprühorgans 43 ist dabei nach oben gerichtet. Die bzw. mindestens eine Düse des oberen Sprühorgans 47 ist nach unten gerichtet.

Der innere Wandungsteil 25 hält ferner mindestens eine Nass-Reinigungsvorrichtung bzw. Waschvorrichtung, wobei zum Beispiel mehrere um die Behälterachse 4 herum verteilte, erste Nass-Reinigungsvorrichtungen bzw. Waschvorrichtungen 51 und eine zur Behälterachse koaxiale, grössere, zweite Nass-Reinigungsvorrichtung bzw. Waschvorrichtung 55 vorhanden sind. Jede Nass-Reinigungsvorrichtung 51, 55 hat ein sich im wesentlichen oberhalb des inneren Wandungsteils 25 im Behälter 3 befindendes Gehäuse 52 bzw. 56 und ein Sprühorgan 53 bzw. 57. Jedes Sprühorgan 53, 57 ist verstellbar und verschiebbar im zugeordneten Gehäuse 52 bzw. 56 geführt und kann von einer Ruhe-Stellung, in der es sich im wesentlichen innerhalb des zugeordneten Gehäuses befindet und bündig mit der unteren Fläche des inneren Wandungsteils 25 ist, in die in der Fig. 1 gezeichnete Reinigungs-Stellung verschoben werden, in der es sich mindestens zum Teil im Prozessraum 28b ungefähr in der Höhe der oberen Endabschnitte der Filter 27 befindet.

Die Gehäuse 42, 46, 52, 56 der verschiedenen Nass-Reinigungsvorrichtungen 41, 45 51, 55 haben einen Einlass für eine Reinigungsflüssigkeit. Jede Nass-Reinigungsvorrichtung ist zum Beispiel ferner mit einer Feder versehen und derart ausgebildet, dass das Sprühorgan ausgehend von seiner Ruhe-Stellung beim Zuführen einer unter Druck stehenden Reinigungsflüssigkeit entgegen der von der Feder erzeugten Rückstellkraft in die Reinigungs-Stellung verschoben wird. Das Sprühorgan bleibt dann in der Reinigungs-Stellung bis die Zufuhr von Reinigungsflüssigkeit beendet und das Sprühorgan durch die Feder in die Ruhe-Stellung zurückverschoben wird.

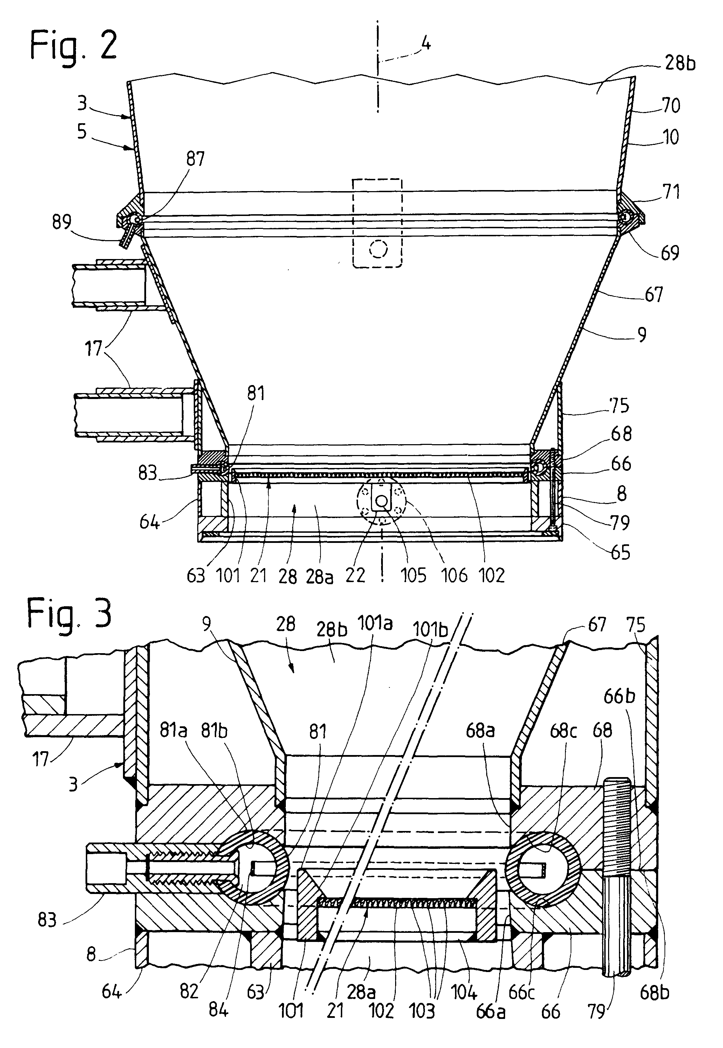

Anschliessend werden einige Einzelheiten der Wandung 5 des Behälters 3 und des Siebbodens 21 näher beschrieben, wozu auf die Figuren 2, 3, 4 verwiesen wird.

Der Verbindungs-Wandungsteil 8 hat einen inneren Mantel 63, einen äusseren Mantel 64 und an seinen Enden einen Ringflansch 65 bzw. 66. Die beiden Mäntel 63, 64 sind zylindrisch und an ihren Enden dicht mit den beiden Ringflanschen 65, 66 verschweisst. Der Gutkammer-Wandungsteil 9 hat einen im wesentlichen konischen Mantel 67, der an seinen Enden dicht mit einem Ringflansch 68 bzw. 69 verschweisst ist. Der Expansionskammer-Wandungsteil 10 hat einen im wesentlichen konischen Mantel 70, der an seinen Enden dicht mit einem Ringflansch 71 bzw. 72 verschweisst ist. Der Filterkammer-Wandungsteil 11 hat einen zylindrischen Mantel 73, der an seinem unteren Ende mit einem Ringflansch 74 verschweisst ist. Ferner ist ein hohlzylindrischer Verstärkungsteil 75 vorhanden, der den Aussenrand des Ringflansches 68 mit einem Abschnitt des Mantels 67 verbindet und mit dem Mantel 67, dem Ringflansch 68 sowie einem hülsenförmigen Teil der Scharniermittel 17 verschweisst ist und die Kehle zwischen der Aussenfläche des Mantels 67 und der ebenen, horizontalen Fläche auf der oberen Seite des Ringflansches 68 gegen Verunreinigungen schützt.

Jeder Ringflansch 66 und 68 hat ein zentrales, zur Behälterachse 4 koaxiales Loch. Diese Löcher sind zum Teil durch zylindrische, miteinander fluchtende Innenflächen 66a bzw. 68a begrenzt. Die beiden Ringflansche 66, 68 haben auf ihren einander zugewandten Stirnseiten ebene, zur Behälterachse 4 rechtwinklige sowie radiale, im wesentlichen ringförmige Auflageflächen 66b bzw. 68b. Jeder Ringflansch 66, 68 hat auf seiner Stirnseite eine ringförmige - und zwar kreisförmige - Nut 66c bzw. 68c. Jede Nut 66c, 68c ist im Querschnitt - d.h. in einem durch die Behälterachse 4 verlaufenden Schnitt - mindestens zum grössten Teil durch eine konkav gebogene, nämlich kreisbogenförmige Nutfläche begrenzt. Wenn die Ringflansche 66, 68 in der in den Figuren 1 bis 4 gezeichneten Weise mit ihren Auflageflächen 66b und 68b aufeinander aufliegen, bilden die konkaven, kreisbogenförmigen Nutflächen im Querschnitt im Idealfall Kreisbogen von ein und demselben Kreis, dessen Zentrum in der durch die aufeinander aufliegenden Auflageflächen 66b, 68b definierten Ebene liegt. Der äussere Nutrand der Nut 66c bzw. 68c liegt in der von der Auflagefläche 66b bzw. 68b definierten Ebene. Die inneren Nutränder der Nuten 66c und 68c liegen unterhalb bzw. oberhalb der von den Auflageflächen 66b bzw. 68b definierten Ebene mindestens annähernd bei den zylindrischen Innenflächen 66a bzw. 68a. Wenn die Wandungsteile 8, 9 miteinander verbunden sind und die Auflageflächen 66b, 68b aufeinander aufliegen, stehen daher die inneren Ränder der Nuten 66c, 68c und die ganzen, sich in zur Behälterachse paralleler Blickrichtung innerhalb der Nuten 66c, 68c befindenden Abschnitte der Ringflansche 66 bzw. 68 sowie der Wandungsteile 8 bzw. 9 in axialer Richtung in Abstand voneinander und sind durch einen Zwischenraum - d.h. einen Ringspalt - voneinander getrennt. Die beiden Nuten 66c, 68c bilden dann zusammen eine ringförmige Rinne, die im Querschnitt, d.h. in einem durch die Behälterachse verlaufenden Schnitt, gegen die Behälterachse und den Behälter-Innenraum 28 hin offen ist. Die äusseren Ränder der Nuten 66c, 68c sind zum Beispiel durch Kanten gebildet. Der innere Rand jeder Nut 66c, 68c besteht beispielsweise aus einer schmalen, im Querschnitt konvex gebogenen Übergangsfläche, welche die konkav gebogene Nutfläche stetig mit der zylindrischen Innenfläche 66a bzw. 68a verbindet. Die Krümmungsradien dieser Übergangsflächen sind im Querschnitt, d.h. in einem durch die Behälterachse verlaufenden Schnitt, wesentlich kleiner als die Krümmungsradien der konkav gebogenen Nutflächen und betragen vorzugsweise weniger als 5% der letztgenannten Krümmungsradien. Die einen Abschnitt der Innenfläche des Wandungsteils 8 bildende Innenfläche 66a verläuft vom inneren Rand der Nut 66c weg nach unten und also vom Wandungsteil 9 weg. Der innere Rand der Nut 66c bildet dementsprechend die höchste Stelle des in axialer Projektion von der Nut 66c umschlossenen Abschnitts des Wandungsteils 8 und von dessen Innenfläche. Die einen Abschnitt der Innenfläche des Wandungsteils 9 bildende Innenfläche 68a verläuft vom inneren Rand der Nut 68c weg nach oben und also vom Wandungsteil 8 weg. Der innere Rand der Nut 68c bildet die tiefste Stelle des in axialer Projektion von der Nut 68c umschlossenen Abschnittes des Wandungsteils 9 und von dessen Innenfläche. Die beiden Wandungsteile 8 und 9 sind mit zu den bereits erwähnten Verbindungsmitteln gehörenden Schrauben 79 lösbar miteinander verbunden, von denen eine in den Figuren 2, 3 und 4 gezeichnet ist.

Eine ringförmige, hohle Dichtung 81 ist zwischen den Ringflanschen 66, 68 der beiden Wandungsteile 8 bzw. 9 angeordnet. Die Dichtung 81 ist zum Beispiel aus einem Schlauchstück gebildet, dessen Enden dicht miteinander verbunden, beispielsweise verklebt werden. Die Dichtung 81 besitzt einen Mantel mit einer Aussenfläche 81a sowie einer Innenfläche 81b. Der Mantel der Dichtung 81 ist überall gleich dick, so dass die beiden Flächen 81a, 81b parallel und im Querschnitt konzentrisch zueinander sind. Die Dichtung 81 enthält einen dicht gegen ihre Umgebung abgeschlossenen Hohlraum 82. Die Dichtung ist bei einer Stelle ihren Umfanges mit einem nur vereinfacht gezeichneten Anschluss 83 versehen, der aus einem mehrteiligen Stutzen besteht und einen in den Hohlraum 82 mündenden Durchgang hat. Die Dichtung 81 ist gummielastisch, besteht zum Beispiel aus Silikongummi und kann durch ein ihrem Hohlraum 82 zugeführtes, unter Druck stehendes Fluid, beispielsweise Druckluft, deformiert und gedehnt werden. Wenn sich die Dichtung 81 in entspanntem, undeformierten Zustand befindet und die Dichtung ihre vorgesehene Soll-Form hat, ist ihre Aussenfläche 81a im Querschnitt kreisförmig und also im Querschnitt um die ganze Dichtung herum konvex gebogen. Im übrigen ist der sich im Querschnitt ergebende Radius der Aussenfläche 81a der Dichtung 81 mindestens annähernd gleich dem sich im Querschnitt ergebenden Krümmungsradius der konkaven, kreisbogenförmigen Nutflächen der Nuten 66c und 68c. Wenn die beiden Wandungsteile 8, 9 miteinander verbunden sind, enthält jede Nut 66c, 68c einen Querschnitts-Abschnitt der Dichtung 81. Der Anschluss 83 ragt zum Beispiel radial zur Behälterachse 4 von der Dichtung 81 weg zwischen den Ringflanschen 66, 68 hindurch nach aussen. Die ebenen Auflageflächen 66b, 68b sind daher beim Anschluss 83 durch je eine radiale Rille unterbrochen. Diese beiden Rillen nehmen zusammen einen beispielsweise zylindrischen Abschnitt des Anschlusses 83 auf. Die ebenen Auflageflächen 66b und 68b umschliessen die Nuten 66c bzw. 68c sowie die Dichtung 81 in einer zur Behälterachse 4 parallelen Projektion im wesentlichen - d.h. abgesehen vom Unterbruch beim Anschluss 83 - vollständig.

Im Hohlraum 82 der Dichtung 81 ist vorzugsweise ein federnder Kern 84 angeordnet. Dessen Querschnittsfläche ist wesentlich kleiner als die Querschnittsfläche des Hohlraums 82, so dass der grösste Teil des letzteren frei, d.h. hohl bleibt. Der Kern 84 ist zum Beispiel im Querschnitt rechteckförmig, wobei die längere Rechteckseite ungefähr parallel zur Behälterachse 4 ist. Der Kern 84 erstreckt sich mindestens annähernd entlang dem ganzen Umfang des Hohlraumes 82 und bildet zum Beispiel einen bei einer Umfangsstelle offen oder einen in sich geschlossenen Ring. Der Kern 84 ist aus einem elastisch deformierbaren Material gebildet, dessen Elastizitätsmodul wesentlich grösser als derjenige des die Dichtung 81 bildenden Materials ist. Der Kern 84 besteht aus einem metallischen Material, wie zum Beispiel Stahl, oder eventuell aus einem elastischen, aber nicht gummielastischen Kunststoff. Der Kern 84 ist federnd und dient als Spannelement, um die Dichtung 81 bereits vor dem Einlegen in die ringförmige Nut 66c derart zu spannen, dass die Dichtung möglichst genau kreisförmig ist und schnell sowie problemlos in die Nut 66c eingesetzt werden kann. Der Kern 84 ist jedoch derart deformierbar, dass eine separat gelieferte Dichtung beim Transport zu einem wenig Platz beanspruchenden, länglichen, flachen Ring zusammengedrückt werden kann.

Die Ringflansche 69, 71, 72, 74 haben auf ihren einander paarweise zugewandten Stirnseiten ringförmige, ebene zur Behälterachse 4 rechtwinklige Auflageflächen, die bei miteinander verbundenen Wandungsteilen 9, 10 11 aufeinander aufliegen. Jeder Ringflansch 69, 71, 72, 74 hat auf seiner Stirnseite eine ringförmige, nämlich kreisförmige Nut. Diese Nuten sind im Querschnitt - d.h. in einem durch die Behälterachse 4 verlaufenden Schnitt - mindestens zum grössten Teil durch eine konkav gebogene, nämlich kreisbogenförmige Nutfläche begrenzt. Wenn die Wandungsteile 9, 10, 11 miteinander verbunden sind und mit den Ringflanschen 69, 71, 72, 74 aneinander anstossen, begrenzen deren Nuten zusammen paarweise gegen den Wirbel- und Prozessraum 28b hin offene Rinnen. Diese enthalten ringförmige, hohle Dichtungen 87 bzw. 93 mit einem Anschluss 89 bzw. 94. Die Dichtungen 87, 93 sind ähnlich ausgebildet wie die Dichtung 81. Eine ringförmige, hohle Dichtung 95 mit einem Anschluss 96 ist zwischen im allgemeinen zylindrischen Flächen des Boden-Wandungsteils 6 und des vertikal verschiebbaren Wandungsteils 7 angeordnet.

Der in den Figuren 2, 3 und 4 ebenfalls ersichtliche Siebboden 21 besitzt einen formfesten, kreisförmigen, Ring 101 und ein von diesem umschlossenes sowie an diesem befestigtes, unterhalb des oberen Ringrandes 101a angeordnetes, gasdurchlässiges Sieb 102. Wenn sich der Siebboden 21 in der in den Figuren 1 bis 4 gezeichneten Betriebs-Stellung befindet, sind der Ring 101 sowie das Sieb 102 horizontal und der Ring 101 ferner koaxial zur Behälterachse 4. Der Ring 101 hat eine zylindrische Aussenfläche. Die Innenfläche des Rings 101 hat einen vom oberen Ringrand 101a weg nach unten bis zum Sieb konisch nach innen geneigten Innenflächenabschnitt 101b und einen sich vom Sieb bis zum unteren Rand des Rings erstreckenden, zylindrischen Abschnitt. Die zylindrische Aussenfläche ist beim oberen Ringrand 101a durch eine schmale, im Querschnitt konvex gebogene Übergangsfläche stetig mit dem konischen Innenflächenabschnitt 101b verbunden. Das Sieb 102 besteht zum Beispiel aus geraden, zueinander parallelen, schmalen Profilstäben 103. Jeder Profilstab 103 hat eine sich in der Betriebs-Stellung oben befindende, ebene, horizontale Deckfläche, verjüngt sich im Querschnitt von dieser weg nach unten und hat im Querschnitt ungefähr die Form eines spitzwinkligen, gleichschenkligen Dreiecks. Zwischen den einander paarweise benachbarten Profilstäben 103 ist entlang der ganzen Länge von diesen ein schmaler Spalt vorhanden. Die Profilstäbe 103 des Siebes 102 sind auf der unteren Seite durch einige die Profilstäbe 103 rechtwinklig kreuzende Stützstäbe 104 abgestützt. Die Profilstäbe 103 und Stützstäbe 104 sind an ihren Enden fest mit dem Ring 101 verschweisst oder eventuell verlötet und bei ihren Kreuzungsstellen miteinander verschweisst oder eventuell verlötet oder versintert. Die Lager- und Schwenkmittel 22 weisen zwei in der Fig. 2 ersichtliche Schwenkzapfen 105 auf, die bei zwei sich diametral gegenüberstehenden Umfangsstellen des Rings 101 starr, aber lösbar an der Unterseite von diesem befestigt und in vom Wandungsteil 8 gehaltenen Lagern 106 gelagert sind. Einer der beiden Schwenkzapfen 105 ist mit einer ausserhalb des Behälters 3 angeordneten Schwenkvorrichtung manuell und/oder elektrisch oder pneumatisch oder hydraulisch verschwenkbar und in verschiedenen Schwenkstellungen fixierbar.

Die Wirbelschicht-Einrichtung 1 besitzt noch Steuermittel 121 zum Steuern verschiedener Teile und Betriebsvorgänge. Die Steuermittel 121 weisen unter anderem Fluid-Steuermittel 122 auf, um den Hohlräumen der Dichtungen 81, 87, 93, 95 ein unter Druck stehendes, vorzugsweise gasförmiges Fluid, nämlich Druckluft, zuzuführen und wieder aus den genannten Hohlräumen abzuleiten. Die Fluid-Steuermittel 122 weisen einen Druckluft-Einlass 123 auf, der mit einer nicht gezeichneten Druckluftquelle - zum Beispiel einem Anschluss eines Druckluft-Leitungsnetzes - verbunden ist. Der Druckluft-Einlass 123 ist zum Beispiel über Leitungen, mindestens ein Filter 124, Mehrwegeventile 125, Drucksensoren 126, Drosseln 127 und Schnellentlüftungsventile 128 mit den Anschlüssen 83, 89, 94, 96 der hohlen Dichtungen verbunden. Die Mehrwegeventile 125 und die Schnellentlüftungsventile 128 haben einen in die Umgebung mündenden Auslass. Ferner ist eine Anzeige- und Steuervorrichtung 131 mit elektronischen und pneumatischen Bauelemente, Lämpchen, Leuchtdioden, Anzeigeinstrumenten, eventuell einem Bildschirm und manuell bedienbaren Schaltern und sonstigen Bedienungselementen vorhanden, um die Wirbelschicht-Einrichtung 1 zu überwachen sowie durch eine Person und/oder automatisch zu steuern.

Nun wird der Betrieb der Wirbelschicht-Einrichtung 1 beschrieben.

Beim "normalen" Betrieb sind die Wandungsteile 6 bis 12 des Behälters 3 fest miteinander verbunden. Ferner befindet sich der Siebboden 21 in seiner in den Figuren 1 bis 4 gezeichneten, horizontalen Betriebs-Stellung und wird von den Lager- und Schwenkmitteln 22 in dieser fixiert. Der obere Ringrand 101a des Siebbodens 21 befindet sich dann im Höhenbereich zwischen den inneren Rändern der beiden Nuten 66c und 68c ungefähr oder genau in der Höhe der aufeinander aufliegenden Auflageflächen 66b, 68b der Ringflansche 66 bzw. 68. Zwischen dem Ring 101 und der Innenfläche der Wandung 5 - insbesondere der Innenfläche 66a des Ringflanschs 66 - ist ein Ringspalt vorhanden. Nun wird noch angenommen, dass der Hohlraum 82 der Dichtung 81 und zum Beispiel auch die Hohlräume der andern hohlen Dichtungen 87, 93, 95 vorher entlüftet worden sind und Luft enthalten, deren Druck gleich dem Luftdruck in der Umgebung des Behälters 3 und gleich dem Druck im Behälter-Innenraum 28 ist. Die Aussenfläche der Dichtung 81 ist dann - wie in den Figuren 2 und 3 gezeichnet - im Querschnitt kreisförmig. Der sich zwischen den inneren Rändern der Nuten 66c, 68c befindende Abschnitt der Dichtung 81 ragt dann zum Beispiel ein wenig nach innen - d.h. zur Behälterachse 4 hin - über die zylindrischen Innenflächen 66a und 68a hinaus, könnte jedoch auch ungefähr oder genau bündig mit diesen sein. Des weiteren ist dann zwischen dem Ring 101 des Siebbodens 21 und der Dichtung 81 ein Ringspalt vorhanden.

Die nicht gezeichnete Druckluftquelle kann dem Druckluft-Einlass 123 Druckluft zuführen, deren Druck zum Beispiel einen absoluten Druckwert von ungefähr 600 kPa bis 1000 kPa hat und also ungefähr 500 bis 900 kPa grösser als der Umgebungs-Luftdruck ist. Die Mehrwegeventile 125 sind mit elektrisch steuerbaren Stellorganen versehen und können die Drücke der den Hohlräumen der hohlen Dichtungen zugeführten Druckluft in Zusammenwirkung mit den Drucksensoren 126 und elektronischen Regelschaltungen auf vorgesehene Sollwerte reduzieren und regeln. Das mit der Dichtung 81 verbundene Mehrwegeventil 125 kann dem Hohlraum 82 der Dichtung 81 Druckluft zuführen, deren Druck wahlweise einen ersten Druckwert oder einen zweiten, kleineren Druckwert hat. Der erste Druckwert kann zum Beispiel ungefähr 500 kPa bis 700 kPa betragen und also ungefähr 400 bis 600 kPa über dem Umgebungs-Luftdruck liegen. Der zweite Druckwert kann zum Beispiel ungefähr 200 kPa kleiner als der erste Druckwert sein, also (absolut) ungefähr 300 kPa bis 500 kPa betragen sowie dementsprechend ungefähr 200 bis 400 kPa über dem Umgebungs-Luftdruck liegen. Wenn den anderen hohlen Dichtungen 87, 93, 95 Druckluft zugeführt wird, kann deren Druck immer den gleichen absoluten, beispielsweise im Bereich von 200 kPa bis 700 kPa liegenden Druckwert haben.

Die Drücke der in den Hohlräumen der Dichtungen 81, 87, 93, 95 vorhandenen Luft können durch die Fluid-Steuermittel 122 während der erforderlichen Zeitdauer mindestens ungefähr auf den vorgesehenen Sollwerten gehalten werden. Mit den Mehrwegeventilen 125 kann auch Luft aus den Hohlräumen der hohlen Dichtungen in die Umgebung abgeleitet werden. Die Schnellentlüftungsventile 128 sind derart ausgebildet, dass sie beim Absinken des Drucks bei ihrem über eine Drossel mit einem Mehrwegeventil 125 verbundenen Anschluss den Hohlraum der mit ihnen vorhandenen Dichtung mit der Umgebung verbinden und eine Schnellentlüftung der Dichtungen bewirken. Die hohlen Dichtungen können beim Ableiten von Luft in die Umgebung vollständig, d.h. derart entlüftet werden, dass der Druck in den Hohlräumen der Dichtungen auf den Umgebungs-Luftdruck absinkt. Wenn der Druck der im Hohlraum 82 der Dichtung 81 vorhandenen Luft gleich dem ersten Druckwert ist, kann jedoch auch nur eine Teil-Entlüftung vorgenommen werden, bei welcher der Druck im Hohlraum 82 vom ersten auf den zweiten Druckwert abgesenkt wird.

Der Druck im Behälter-Innenraum 28 ist bei den verschiedenen Betriebsvorgängen gleich dem Umgebungs-Luftdruck oder kleiner als dieser. Wenn den Hohlräumen der hohlen Dichtungen 81, 87, 93, 95 Luft mit einem über dem Umgebungs-Luftdruck liegenden Druck zugeführt wird, deformiert diese Luft die Dichtungen, wobei diese insbesondere auch im Querschnitt gedehnt werden. Die im undeformierten Zustand der Dichtungen 81, 87, 93 im Querschnitt kreisförmigen Aussenflächen der Dichtungen werden dann gegen die konkave Kreisbogen bildende Nutflächen der Nuten 66c, 68c bzw. der Nuten der Ringflansche 69, 71, 72, 74 gedrückt. Die Dichtungen 81, 87, 93 liegen dann dicht an den ganzen konkav gebogenen Nutflächen an und verbinden die ihnen benachbarten Ringflansche dicht miteinander. Die Dichtung 95 verbindet dann den Boden-Wandungsteil 6 dicht mit dem Wandungsteil 7. Die hohlen, aufblasbaren Dichtungen 81, 87, 93 und 95 dichten also im aufgeblasenen Zustand den Innenraum des Behälters 3 bei verschiedenen Verbindungsstellen von Wandungsteilen gegen die Umgebung des Behälters 3 ab.

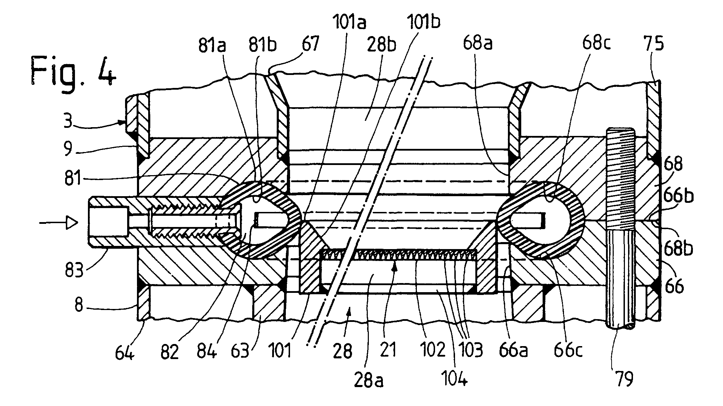

Wenn der Druck der im Hohlraum 82 der Dichtung 81 vorhandenen Luft den ersten, grösseren Druckwert hat, wird die Dichtung 81 in der bereits beschriebenen Weise gegen die Nutflächen der Nuten 66c, 68c gedrückt. Zudem wird die Dichtung 81 gemäss der Fig. 4 zwischen den inneren Rändern der Nuten 66c, 68c derart nach innen, d.h. gegen die Behälterachse 4 ausgebuchtet, dass sie im Querschnitt nicht mehr kreisförmig ist und in der Nähe des oberen Randes des Rings 101 dicht an diesem anliegt. Wenn der Hohlraum 82 der Dichtung 81 Druckluft enthält, deren Druck gleich dem ersten Druckwert ist, verbindet also die Dichtung 81 die beiden Ringflansche 66, 68 der Wandungsteile 8 bzw. 9 dicht miteinander und gleichzeitig die letzteren dicht mit dem Ring 101 des Siebbodens 21.

Wenn der Druck der im Hohlraum 82 der Dichtung 81 vorhandenen Luft nur gleich dem zweiten, kleineren Druckwert ist, wird die Dichtung nur noch wenig gegen die Behälterachse hin ausgebuchtet. Die innerste, sich am nächsten bei der Behälterachse 4 befindende Stelle der Aussenfläche der Dichtung 81 befindet sich dann ein wenig innerhalb der durch die Innenflächen 66a, 68a definierten Zylinderfläche. Zwischen dem Siebboden 21 und der Dichtung 81 ist dann - ähnlich wie es in der Fig. 3 für den Fall der vollständig entlüfteten Dichtung gezeichnet ist - ein freier Ringspalt vorhanden. Die Dichtung 81 verbindet dann jedoch die Ringflansche 66 und 68 immer noch dicht miteinander.

Wenn ein teilchenförmiges, zum Beispiel zur Bildung eines Arzneimittels dienendes Gut im Behälter 3 bewegt und behandelt werden soll, wird der Siebboden 21 gemäss der Fig 4 mit der Dichtung 81 abgedichtet, d.h. dicht mit der Wandung des Behälters verbunden. Dann wird eine Charge des teilchenförmigen Gutes durch den vorübergehend geöffneten Guteinlass 33 in den Wirbel- und Prozessraum 28b eingebracht. Ferner wird ein aus Luft bestehendes Prozessgas durch den Gaseinlass 29 in den Gasverteiler-Raum 28a, von diesem nach oben durch den Siebboden 21, durch den Wirbel- und Prozessraum 28b sowie durch die Filter 27 in den Reingas-Raum 28c und danach durch den Gasauslass 29 aus dem Behälter 3 heraus gesaugt. Das Prozessgas verwirbelt das teilchenförmige Gut, so dass dieses im unteren Teil des Wirbel- und Prozessraums 28b eine Wirbelschicht bildet. Beim Verwirbeln des Gutes wird eventuell mit dem Sprühorgan 37 mindestens zeitweise ein mindestens zum Teil flüssiges Sprühmaterial auf die Teilchen des Gutes gesprüht, um diese zu agglomerieren und/oder mit einem Überzug zu versehen. Ferner werden die Teilchen beim Verwirbeln getrocknet. Die Sprühorgane 43 und 47 der Nass-Reinigungsvorrichtungen 41 bzw. 45 befinden sich beim Verwirbeln eines Gutes im wesentlichen vollständig in den Gehäusen 42 bzw. 46 ausserhalb des Behälter-Innenraums 28. Die Sprühorgane 53 und 57 der Nass- und Reinigungsvorrichtungen 51 bzw. 55 befinden sich im wesentlichen vollständig oberhalb des Wirbel- und Prozessraums 28b. Der letztere und der Gasverteiler-Raum 28a enthalten also beim Behandeln eines Gutes und auch bei der Entleerung des Behälters 3 keine zur Nass-Reinigung dienende Sprühorgane.

Wenn die Behandlung des teilchenförmigen Gutes beendet ist, wird auch das Hindurchleiten von Prozessgas durch den Behälter 3 beendet. Ferner wird der Druck der in der Dichtung 81 vorhandenen Druckluft vom ersten Druckwert auf den zweiten Druckwert gesenkt, so dass dann zwischen der Dichtung 81 und dem Siebboden 21 ein freier Ringspalt entsteht. Der Siebboden wird nun mit der Schwenkvorrichtung der Lager- und Schwenkmittel 22 um ungefähr 90° in eine ungefähr vertikale Entleerungs-Stellung verschwenkt. Das teilchenförmige Gut kann nun am Siebboden vorbei und durch den vorübergehend geöffneten Gutauslass 34 hindurch aus dem Behälter 3 heraus gelangen. Danach wird zum Beispiel wieder eine neue Charge von teilchenförmigem Gut im Behälter 3 behandelt.

Ein Teil der Innenfläche der Wandung 5 und der sich im Behälter befindenden Teile wird von Zeit zu Zeit und insbesondere bei einem Wechsel des verarbeiteten, teilchenförmigen Gutes und des aus diesem hergestellten Produktes bei entleertem Behälter mit einer Reinigungsflüssigkeit gereinigt, d.h. gewaschen. Die verschiedenen Wandungsteile des Behälters bleiben dabei dicht miteinander verbunden. Für die Nass-Reinigung wird den Nass-Reinigungsvorrichtungen 41, 45, 51, 55 abwechselnd oder gleichzeitig eine Reinigungsflüssigkeit zugeführt, die unter einem Druck von beispielsweise 400 kPa bis 1000 kPa steht (und eine Temperatur zwischen 0° C und 100° C oder eventuell bis 150° C hat). Die Reinigungflüssigkeit besteht zum Beispiel aus Wasser, dem für gewisse Reinigungsphasen noch ein Detergens oder sonstiger Reinigungszusatz beigefügt wird. Die sich vorher in ihren Ruhe-Stellungen befindenden Sprühorgane 43, 47 werden durch die Reinigungsflüssigkeit in den Behälter-Innenraum 28 in die in der Fig. 1 gezeichneten Reinigungs-Stellungen verschoben. Dergleichen verschiebt die Reinigungsflüssigkeit die sich vorher in den Ruhe-Stellungen befindenden Sprühorgane 53, 57 nach unten in die in der Fig. 1 gezeichneten Reinigungs-Stellungen. Die Sprühorgane der Nass-Reinigungsvorrichtungen 41, 45, 51, 55 sprühen dann Reinigungsflüssigkeit gegen die Aussenflächen der Filter 27, die untere Fläche des inneren Wandungsteils 25, die Innenflächen der Wandungsteile 8 bis 11 und eventuell auch der Wandungsteile 6 sowie 7, die an den Innenraum 28 angrenzenden Abschnitte der Dichtungen 81, 87, 93, den Siebboden 21 und gegen sich allenfalls sonst noch unter dem inneren Wandungsteil 25 im Behälter befindende Teile. Der Druck der im Hohlraum 82 in der Dichtung 81 vorhandenen Druckluft ist während der Nass-Reinigung oder mindestens während eines Teils von dieser gleich dem zweiten, kleineren Druckwert, so dass der Siebboden 21 durch einen Spalt von der Dichtung 81 getrennt ist. Der Siebboden 21 wird während der Nass-Reinigung in verschiedene Stellungen verschwenkt und eventuell um volle Drehungen gedreht. Die Reinigungsflüssigkeit wird zum Beispiel durch den Gutauslass 34 aus dem Behälter 3 heraus geleitet.

Wenn der Druck der im Hohlraum 82 der Dichtung 81 vorhandenen Druckluft den zweiten, kleineren Druckwert hat, bildet die Dichtung 81 ähnlich wie in den Figuren 2 und 3 einen relativ glatten Übergang zwischen den zylindrischen Innenflächen 66a und 68a der Ringflansch 66 bzw. 68. Wenn die Dichtung 81 Druckluft mit dem ersten, grösseren Druckwert enthält und gemäss der Fig. 4 den Ring 101 des Siebbodens 21 dicht mit der Wandung des Behälters verbindet, bildet sie beim oberen Ringrand 101a einen relativ glatten Übergang zwischen der Innenfläche 68a des Ringflansches 68 und dem konischen, vom oberen Ringrand 101a weg nach innen geneigten Innenflächenabschnitt 101b des Rings 101. Wenn die Dichtungen 87, 93 Druckluft enthalten, bilden sie ebenfalls ziemlich glatte Übergänge zwischen den Innenflächen der durch diese Dichtungen dicht miteinander verbundenen Ringflansche. Die Tatsache, dass die Dichtungen 81, 87, 93 an den ganzen konkav gebogenen Nutflächen der Querschnittsabschnitte dieser Dichtungen enthaltenden Nuten anliegen, und die vorgängig beschriebenen, von den Dichtungen gebildeten, praktisch glatten Übergänge tragen dazu bei, dass beim Verwirbeln eines teilchenförmigen Gutes und beim Ableiten von diesem aus dem Behälter 3 wenig Staub oder sonstiges Material bei den mit den Dichtungen 81, 87, 93 abgedichteten Verbindungen hängen bleibt und dass die an dem Wirbel- und Prozessraum 28b angrenzenden Flächen der Wandungsteile und Dichtungen bei der Nass-Reinigung gut gereinigt werden können. Bei der Nass-Reinigung ist es insbesondere von Vorteil, dass keine Reinigungsflüssigkeit in die Nuten 66c, 68c und die entsprechenden Nuten der Ringflansche 69, 71, 72, 74 hineingelangt. Ferner kann die zu den Dichtungen 81, 87, 93 und zu den an diese angrenzenden Abschnitten der Wandungsteile gelangende Reinigungsflüssigkeit überall gut nach unten abfliessen, so dass nirgends Reinigungsflüssigkeit hängen bleibt. Die Ausbildung des Siebbodens 21 trägt dazu bei, dass beim normalen Betrieb praktisch keine Gut-Teilchen oder Staubpartikel im Sieb 102 hängen bleiben und dass der Siebboden bei der Nass-Reinigung gut gereinigt werden kann.

Wenn der Behälter-Innenraum 28 beispielsweise für Revisionsarbeiten zugänglich gemacht werden soll, werden zuerst die hohlen Dichtungen 81, 87, 93 und 95 vorübergehend entlüftet. Danach können einige oder alle lösbar miteinander verbundenen Wandungsteile voneinander getrennt werden. Da sich der Siebboden 21 nahe beim oberen Ende des Wandungsteils 8 befindet, kann er, wenn die beiden Wandungsteile 8, 9 voneinander getrennt sind, problemlos in den Wandungsteil 8 eingebaut und aus diesem ausgebaut werden. Die hohlen, aufblasbaren Dichtungen gewährleisten trotz allfälliger Fabrikationsungenauigkeiten eine gute Abdichtung.

Die Einrichtung kann auf verschiedene Arten geändert werden. Die bei den inneren Rändern der Nuten 66c, 68c und beim oberen Ringrand 101a gebogenen Übergangsflächen können zum Beispiel durch Kanten ersetzt werden. Des weiteren könnten die zylindrische Innenfläche 68a und eventuell auch die zylindrische Innenfläche 66a sowie die zylindrische Aussenfläche des Rings 101 durch geneigte, konische Flächen ersetzt werden. Bei einer derartigen Modifikation sollte sichergestellt werden, dass sich nirgends Toträume und Kehlen oder Rillen ergeben in denen sich beim normalen Betrieb Verunreinigungen und bei der Nass-Reinigung Reinigungsflüssigkeit ansammeln kann. Der Siebboden 21 kann statt des aus Profilstäben 103 gebildeten Siebs 102 ein konventionelles, aus einander kreuzenden Drähten bestehendes Sieb aufweisen. Eventuell kann dem Hohlraum der hohlen Dichtungen anstelle von Druckluft ein anderes Gas mit einem über den Umgebungs-Luftdruck liegenden Druck oder sogar eine Flüssigkeit zugeführt werden.

Für weitere Einzelheiten der Einrichtung - insbesondere der Ausbildung der Nass-Reinigungsvorrichtungen 51, 55, der Filter sowie der Gas-Reinigungsvorrichtungen und von Fenstern des Behälters - sei auf die gleichzeitig unter Beanspruchung der Prioritäten von den Schweizerpatentanmeldungen 3706/95, 3707/95 und 3708/95 eingereichten Patentanmeldungen und auf die für diese veröffentlichten Publikationen EP-A 0 781 587 bzw. EP-A 0 781 585 bzw. EP-A 0 781 594 verwiesen, deren Inhalt hiermit in die vorliegende Patentanmeldung einbezogen wird, soweit sich keine Widersprüche ergeben.

## Patentansprüche

1. Wirbelschicht-Einrichtung mit einem Behälter (3), der eine Wandung (5) mit zwei aneinander anstossenden, voneinander wegnehmbaren Wandungsteilen (8, 9) aufweist, mit einem im Behälter (3) angeordneten Siebboden (21) und mit Dichtungsmitteln, um die beiden Wandungsteile (8, 9) dicht miteinander und den Siebboden (21) dicht mit der Wandung (5) zu verbinden, **dadurch gekennzeichnet, dass** jeder der beiden Wandungsteile (8, 9) eine ringförmige Nut (66c, 68c) aufweist, die im Querschnitt mindestens zum Teil durch eine konkav gebogene Nutfläche begrenzt ist, dass die beiden Nuten (66c, 68c) bei aneinander anstossenden Wandungsteilen (8, 9) zusammen eine gegen den Siebboden (21) hin offene Rinne bilden, dass die Dichtungsmittel eine ringförmige Dichtung (81) aufweisen, die einen Hohlraum (82) zum Aufnehmen eines Fluids, eine im Querschnitt mindestens zum Teil konvex gebogene und im Querschnitt um die ganze Dichtung (81) herum stetige sowie glatte Aussenfläche (81a) und Querschnittsabschnitte besitzt, die sich bei aneinander anstossenden Wandungsteilen (8, 9) in den beiden Nuten (66c, 68c) befinden, und dass der Siebboden (21) und die Dichtung (81) derart ausgebildet sind, dass die Dichtung (81) durch ein ihrem Hohlraum (82) zugeführtes, unter Druck stehendes Fluid derart deformierbar ist, dass die Dichtung (81) dicht an beiden Wandungsteilen (8, 9) und am Siebboden (21) anliegt.

2. Einrichtung nach Anspruch 1, **dadurch gekennzeichnet, dass** der Behälter (3) eine Behälterachse (4) definiert, dass der Siebboden (21) um eine zur Behälterachse (4) rechtwinklige Schwenkachse schwenkbar ist und dass der Siebboden (21) und die Dichtung (81) derart ausgebildet sind, dass die Dichtung (81), wenn der Druck einen ersten Druckwert hat, in der genannten Weise dicht an den beiden Wandungsteilen (8, 9) und am Siebboden (21) anliegt, und wenn der Druck einen zweiten, kleineren Druckwert hat, dicht an den beiden Wandungsteilen (8, 9) anliegt, aber durch einen Zwischenraum vom Siebboden (21) getrennt ist.

3. Einrichtung nach Anspruch 2, **gekennzeichnet durch** Fluid-Steuermittel (122), um wahlweise ein unter Druck stehendes Fluid in den Hohlraum (82) hinein und wieder aus diesem heraus zu leiten und um den Druck des im Hohlraum (82) der Dichtung (81) vorhandenen Fluids wahlweise ungefähr auf dem ersten Druckwert oder ungefähr auf dem zweiten, kleineren Druckwert zu halten.

4. Einrichtung nach einem der Ansprüche 1 bis 3, **dadurch gekennzeichnet, dass** jede der in einem der Wandungsteile (8, 9) vorhandenen Nuten (66c, 68c) auf ihrer dem Siebboden (21) abgewandten Seite einen äusseren Nutrand hat und dass die beiden Wandungsteile (8, 9) in aneinander anstossendem Zustand mit unmittelbar an die äusseren Nutränder anschliessenden Auflageflächen (66b, 68b) aufeinander aufliegen.

5. Einrichtung nach einem der Ansprüche 1 bis 4, **dadurch gekennzeichnet, dass** jede der in einem der Wandungsteile (8, 9) vorhandenen Nuten (66c, 68c) einen Nutgrund sowie zwei Nutränder hat und sich im Querschnitt über ihre ganze Tiefe vom Nutgrund zu den Nuträndern hin erweitert.

6. Einrichtung nach einem der Ansprüche 1 bis 5, **dadurch gekennzeichnet, dass** die Aussenfläche (81a) der Dichtung (81) mindestens in einem gewissen Zustand der letzteren im Querschnitt um die ganze Dichtung (81) herum konvex gebogen ist und dass jede der in einem der beiden Wandungsteile (8, 9) vorhandenen Nuten (66c, 68c) mindestens zum grössten Teil durch die konkav gebogene Nutfläche begrenzt ist.

7. Einrichtung nach einem der Ansprüche 1 bis 6, **dadurch gekennzeichnet, dass** die Aussenfläche (81a) der Dichtung (81) mindestens in einem gewissen Zustand der letzteren im Querschnitt kreisförmig ist und dass die konkav gebogene Nutfläche jeder der in einem der Wandungsteile (8, 9) vorhandenen Nuten (66c, 68c) im Querschnitt einen Teil eines Kreisbogens bildet.

8. Einrichtung nach einem der Ansprüche 1 bis 7, **dadurch gekennzeichnet, dass** die Dichtung (81), mindestens wenn sie die beiden Wandungsteile (8, 9) dicht miteinander verbindet, an der ganzen konkav gebogenen Nutfläche jeder Nut (66c, 68c) anliegt und diese im wesentlichen ausfüllt.

9. Einrichtung nach einem der Ansprüche 1 bis 7, **dadurch gekennzeichnet, dass** im Hohlraum (82) der Dichtung (81) ein federnder Kern (84) angeordnet ist, der sich mindestens annähernd entlang dem ganzen Umfang des Hohlraums (82) erstreckt, diesen im Querschnitt nur zum Teil ausfüllt und aus einem Material besteht, dessen Elastizitätsmodul grösser ist als derjenige des die Dichtung (81) bildenden Materials.

10. Einrichtung nach einem der Ansprüche 1 bis 9, **dadurch gekennzeichnet, dass** der Siebboden (21) einen Ring (101) mit einem oberen Ringrand und ein vom Ring (101) umschlossenes, sich unterhalb des oberen Ringrandes befindendes Sieb (102) aufweist, dass der Ring (101) einen vom oberen Ringrand zum Sieb (102) hin nach innen geneigten Innenflächenabschnitt hat und dass die Dichtung (81) ausgebildet ist, um in der Nähe des oberen Ringrandes am Ring (101) anzuliegen.

11. Einrichtung nach einem der Ansprüche 1 bis 10, **dadurch gekennzeichnet, dass** der Behälter (3) einen gegen die Umgebung abgeschlossenen Innenraum (28) enthält, dass die Wandungsteile (8, 9) und die Dichtung (81) an den Innenraum (28) angrenzen und dass mindestens ein Sprühorgan (43, 47, 53, 57) vorhanden ist, um eine Reinigungsflüssigkeit im Innenraum (28) gegen die Wandungsteile (8, 9), den Siebboden (21) und die Dichtung (81) zu sprühen.

12. Einrichtung nach Anspruch 11, **dadurch gekennzeichnet, dass** mindestens ein aussen am Behälter (3) angeordnetes Gehäuse (42, 46) mit einem gegen die Umgebung des Behälters (3) abgeschlossenen Gehäuse-Innenraum vorhanden ist und dass das bzw. mindestens ein Sprühorgan (43, 47, 53, 57) verstellbar ist und von einer Ruhe-Stellung, in der es sich innerhalb des Gehäuses (42, 46) befindet, in eine Reinigungs-Stellung verstellbar ist, in der es sich mindestens zum Teil ausserhalb des Gehäuses (42, 46) im freien Innenraum (28) des Behälters (3) befindet.

## Claims

1. Fluidized-bed apparatus comprising a container (3) including a wall (5) having two wall parts (8, 9) abutting one another and removable from one another, a perforated bottom (21) arranged in the container (3) and a sealing means for connecting the two wall parts (8, 9) tightly to one another and for connecting the perforated bottom (21) tightly to the wall (5), **characterized in that** each of the two wall parts (8, 9) has an annular groove (66c, 68c) which is bounded in cross-section, at least in part, by a concave groove surface, the two grooves (66c, 68c) together form a channel, open towards the perforated bottom (21), in wall parts (8, 9) abutting one another, that the sealing means comprises an annular seal (81) which has a cavity (82) for receiving a fluid, a smooth outer surface (81a) which is, at least in part, convex in cross-section and continuous in cross-section around the entire seal (81) and cross-sectional segments which are located in the two grooves (66c, 68c) in wall parts (8, 9) abutting one another, and that the perforated bottom (21) and the seal (81) are formed in such a way that the seal (81) is deformable by a fluid, fed to its cavity (82) and under pressure, so that the seal (81) rests tightly against both wall parts (8, 9) and against the perforated bottom (21).

2. Apparatus according to Claim 1, **characterized in that** the container (3) defines a container axis (4), that the perforated bottom (21) is pivotable about an axis of rotation perpendicular to the container axis (4), that the perforated bottom (21) and the seal (81) are formed in such a way that the seal (81) rests in the stated manner tightly against the two wall parts (8, 9) and against the perforated bottom (21) when the pressure is at the first pressure value, and rests tightly against the two wall parts (8, 9) but is separated from the perforated bottom (21) by a gap when the pressure is at a second, lower pressure value.

3. Apparatus according to Claim 2, **characterized in that** fluid control means (122) for alternatively passing a fluid under pressure into the cavity (82) and out of said cavity again and for keeping the pressure of the fluid present in the cavity (82) of the seal (81) alternatively approximately at the first pressure value or approximately at the second, lower pressure value.

4. Apparatus according to any of Claims 1 to 3, **characterized in that** each of the grooves (66c, 68c) present in one of the wall parts (8, 9) has an outer groove edge on its side facing away from the perforated bottom (21) and that, in the state abutting one another, the two wall parts (8, 9) lie one on top of the other with support surfaces (66b, 68b) directly adjacent to the outer groove edges.

5. Apparatus according to any of Claims 1 to 4, **characterized in that** each of the grooves (66c, 68c) present in one of the wall parts (8, 9) has a groove base and two groove edges and widens in cross-section over its entire depth from the groove base to the groove edges.

6. Apparatus according to any of Claims 1 to 5, **characterized in that** the outer surface (81a) of the seal (81) is curved in a convex manner in cross-section around the entire seal (81), at least when the latter is in a certain state, and that each of the grooves (66c, 68c) present in one of the two wall parts (8, 9) is bounded, at least for the most part, by a concave groove surface.

7. Apparatus according to any of Claims 1 to 6, **characterized in that** the outer surface (81a) of the seal (81) is circular in cross-section, at least when said seal is in a certain state, and that the concave groove surface of each of the grooves (66c, 68c) present in one of the wall parts (8, 9) forms a part of an arc in cross-section.

8. Apparatus according to any of Claims 1 to 7, **characterized in that**, at least when it connects the two wall parts (8, 9) tightly to one another, the seal (81) is adjacent to the entire concave groove surface of each groove (66c, 68c) and essentially fills said groove.

9. Apparatus according to any of Claims 1 to 7, **characterized in that** a springy core (84) is arranged in the cavity (82) of the seal (81) and extends at least approximately along the entire circumference of the cavity (82), only partly fills the latter in cross-section and consists of a material whose modulus of elasticity is greater than that of the material forming the seal (81).

10. Apparatus according to any of Claims 1 to 9, **characterized in that** the perforated bottom (21) has a ring (101) with an upper ring edge and a sieve (102) enclosed by the ring (101) and located below the upper ring edge, that the ring (101) has an inner surface section inclined inwards from the upper ring edge to the sieve (102) and that the seal (81) is formed to rest against the ring (101) in the vicinity of the upper ring edge.

11. Apparatus according to any of Claims 1 to 10, **characterized in that** the container (3) contains an interior (28) sealed from the environment, that the wall parts (8, 9) and the seal (81) bound the interior (28) and that at least one spray member (43, 47, 53, 57) is present for spraying a cleaning liquid in the interior (28) against the wall parts (8, 9), the perforated bottom (21) and the seal (81).

12. Apparatus according to Claim 11, **characterized in that** at least one housing (42, 46) arranged on the outside of the container (3) and having a housing interior sealed from the environment of the container (3) is present and that the or at least one spray member (43, 47, 53, 57) is adjustable and can be adjusted from a rest position, in which it is present inside the housing (42, 46) , to a cleaning position in which it is present at least partly outside the housing (42, 46) in the free interior (28) of the container (3).

## Revendications

1. Dispositif à lit fluidisé comprenant un récipient (3) présentant une paroi (5) munie de deux parties de cloisonnement (8, 9) butant l'une contre l'autre et pouvant être dissociées l'une de l'autre, un fond criblé (21) logé dans le récipient (3), et des moyens d'étanchement pour relier hermétiquement les deux parties de cloisonnement (8, 9) l'une à l'autre et pour relier hermétiquement le fond criblé (21) à la paroi (5), **caractérisé par le fait que** chacune des deux parties de cloisonnement (8, 9) présente une rainure annulaire (66c, 68c) délimitée en coupe transversale, au moins en partie, par une surface à courbure concave ; **par le fait que** les deux rainures (66c, 68c) forment associativement, lorsque les parties de cloisonnement (8, 9) sont mutuellement en butée, une rigole ouverte vers le fond criblé (21) ; **par le fait que** les moyens d'étanchement comprennent une garniture annulaire d'étanchement (81) qui possède une cavité (82) pour recevoir un fluide, une surface extérieure lisse (81a) au moins partiellement à courbure convexe en coupe transversale et ininterrompue, en coupe transversale, autour de l'intégralité de la garniture d'étanchement (81), ainsi que des régions de section transversale situées dans les deux rainures (66c, 68c) lorsque les parties de cloisonnement (8, 9) sont mutuellement en butée ; et **par le fait que** le fond criblé (21) et la garniture d'étanchement (81) sont réalisés de façon telle que ladite garniture d'étanchement (81) soit déformable, par un fluide pressurisé délivré à sa cavité (82), de telle sorte que ladite garniture d'étanchement (81) porte hermétiquement contre les deux parties de cloisonnement (8, 9) et contre le fond criblé (21).

2. Dispositif selon la revendication 1, **caractérisé par le fait que** le récipient (3) définit un axe (4) ; **par le fait que** le fond criblé (21) peut pivoter autour d'un axe de pivotement perpendiculaire à l'axe (4) du récipient ; et **par le fait que** le fond criblé (21) et la garniture d'étanchement (81) sont réalisés de façon telle que ladite garniture d'étanchement (81) porte hermétiquement contre les deux parties de cloisonnement (8, 9) et contre le fond criblé (21), de la manière précitée, lorsque la pression présente une première valeur, et porte hermétiquement contre les deux parties de cloisonnement (8, 9) lorsque la pression présente une seconde valeur inférieure, mais soit néanmoins séparée du fond criblé (21) par un espace intercalaire.

3. Dispositif selon la revendication 2, **caractérisé par** des moyens (122) de commande d'un fluide, conçus pour introduire sélectivement un fluide pressurisé dans la cavité (82), et pour l'en faire sortir de nouveau, et pour maintenir sélectivement la pression du fluide, présent dans la cavité (82) de la garniture d'étanchement (81), approximativement à la première valeur ou approximativement à la seconde valeur inférieure.

4. Dispositif selon l'une des revendications 1 à 3, **caractérisé par le fait que** chacune des rainures (66c, 68c), présentes dans l'une des parties de cloisonnement (8, 9), comporte un bord extérieur sur son côté tourné à l'opposé du fond criblé (21) ; et **par le fait que** les deux parties de cloisonnement (8, 9) sont appliquées l'une contre l'autre, lorsqu'elles sont mutuellement en butée, par des surfaces d'appui (66b, 68b) directement attenantes aux bords extérieurs des rainures.

5. Dispositif selon l'une des revendications 1 à 4, **caractérisé par le fait que** chacune des rainures (66c, 68c) présentes dans l'une des parties de cloisonnement (8, 9) comprend un fond, ainsi que deux bords, et s'évase en coupe transversale, sur toute sa profondeur, en direction desdits bords à partir dudit fond.

6. Dispositif selon l'une des revendications 1 à 5, **caractérisé par le fait que** la surface extérieure (81a) de la garniture d'étanchement (81) présente une courbure convexe en coupe transversale, autour de l'intégralité de la garniture d'étanchement (81), au moins dans un état déterminé de cette dernière ; et **par le fait que** chacune des rainures (66c, 68c) présentes dans l'une des deux parties de cloisonnement (8, 9) est délimitée, au moins en majeure partie, par la surface à courbure concave.

7. Dispositif selon l'une des revendications 1 à 6, **caractérisé par le fait que** la surface extérieure (81a) de la garniture d'étanchement (81) est circulaire, en coupe transversale, au moins dans un état déterminé de ladite garniture ; et **par le fait que** la surface à courbure concave de chacune des rainures (66c, 68c) présentes dans l'une des parties de cloisonnement (8, 9) matérialise, en coupe transversale, une partie d'un arc de cercle.

8. Dispositif selon l'une des revendications 1 à 7, **caractérisé par le fait que**, au moins lorsqu'elle relie hermétiquement les deux parties de cloisonnement (8, 9) l'une à l'autre, la garniture d'étanchement (81) porte contre l'intégralité de la surface à courbure concave de chaque rainure (66c, 68c), et comble sensiblement cette dernière.

9. Dispositif selon l'une des revendications 1 à 7, **caractérisé par le fait qu'**un noyau élastique (84), logé dans la cavité (82) de la garniture d'étanchement (81), s'étend au moins approximativement le long de tout le pourtour de ladite cavité (82), ne comble que partiellement cette dernière en coupe transversale, et est constitué d'un matériau dont le module d'élasticité est supérieur à celui du matériau constituant la garniture d'étanchement (81).

10. Dispositif selon l'une des revendications 1 à 9, **caractérisé par le fait que** le fond criblé (21) présente un anneau (101) muni d'un bord supérieur, et un crible (102) ceinturé par l'anneau (101) et situé au-dessous du bord supérieur dudit anneau ; **par le fait que** l'anneau (101) comporte une région de surface intérieure inclinée vers l'intérieur en direction du crible (102), à partir du bord supérieur dudit anneau ; et **par le fait que** la garniture d'étanchement (81) est réalisée de manière à être appliquée contre l'anneau (101) à proximité du bord supérieur dudit anneau.

11. Dispositif selon l'une des revendications 1 à 10, **caractérisé par le fait que** le récipient (3) renferme un espace interne (28) obturé vis-à-vis de l'environnement ; **par le fait que** les parties de cloisonnement (8, 9) et la garniture d'étanchement (81) sont limitrophes dudit espace interne (28) ; et **par le fait qu'**au moins un organe pulvérisateur (43, 47, 53, 57) est présent pour pulvériser un fluide de nettoyage, renfermé par l'espace interne (28), contre les parties de cloisonnement (8, 9), le fond criblé (21) et la garniture d'étanchement (81).

12. Dispositif selon la revendication 11, **caractérisé par le fait qu'**au moins un carter (42, 46), présentant un espace interne obturé vis-à-vis de l'environnement du récipient (3), est placé à l'extérieur dudit récipient (3) ; et **par le fait que** l'organe ou, respectivement, au moins un organe pulvérisateur (43, 47, 53, 57) est réglable et peut être amené d'une position de repos, dans laquelle il se trouve à l'intérieur du carter (42, 46), à une position de nettoyage dans laquelle il se trouve, au moins en partie, à l'extérieur dudit carter (42, 46) dans l'espace interne libre (28) du récipient (3).
